Europäisches Patentamt

(19) European Patent Office

Office européen des brevets

(11) Numéro de publication : **0 309 419 B1**

(12) **FASCICULE DE BREVET EUROPEEN**

(45) Date de publication du fascicule du brevet :
**10.07.91 Bulletin 91/28**

(51) Int. Cl.$^5$ : **D05B 23/00, B65G 47/26**

(21) Numéro de dépôt : **88830366.6**

(22) Date de dépôt : **14.09.88**

(54) **Procédé et machine pour le transfert automatique des collants ou produits manufacturés tubulaires similaires entre deux groupes de machines de finissage desdits produits manufacturés.**

(30) Priorité : **22.09.87 IT 949187**

(43) Date de publication de la demande :
**29.03.89 Bulletin 89/13**

(45) Mention de la délivrance du brevet :
**10.07.91 Bulletin 91/28**

(84) Etats contractants désignés :
**DE GB IT**

(56) Documents cités :
**BE-A- 408 505**
**BE-A- 417 356**
**FR-A- 2 366 395**
**GB-A- 1 092 073**
**GB-A- 2 187 156**

(56) Documents cités :
**US-A- 3 433 187**
**US-A- 3 934 707**
**US-A- 4 428 315**
**US-A- 4 598 814**
**US-A- 4 635 574**

(73) Titulaire : **SOLIS S.r.l.**
**Via Cassia 65**
**I-50029 Tavarnuzze Firenze (IT)**

(72) Inventeur : **Gazzarrini, Vinicio**
**Via Pracatice**
**I-50023 Impruneta (Firenze) (IT)**

(74) Mandataire : **Martini, Lazzaro**
**Ufficio Brevetti Ing. Lazzaro Martini Via dei Rustici 5**
**I-50122 Firenze (IT)**

EP 0 309 419 B1

Jouve, 18, rue Saint-Denis, 75001 PARIS

## Description

La présente invention concerne un procédé et une machine pour le transfert automatique des collants ou produits manufacturés tubulaires similaires d'un premier groupe à un deuxième de machines de finissage desdits produits manufacturés, homogènes ou non.

On connait différents dispositifs pour le transfert automatique des collants ou produits manufacturés tubulaires similaires d'une machine de finissage d'un premier type à une machine de finissage d'un second type.

En particulier, le brevet BE 070.813 décrit un dispositif pour le transfert des collants d'une machine de formation des collants avec couture à une machine à coudre les soufflets d'entrejambe périnéaux.

En outre le brevet BE 136.391 décrit un dispositif pour le transfert des collants d'une machine de formation des collants avec couture à une machine à coudre les pointes et également un dispositif pour le transfert des collants d'une machine à coudre les bouts à une machine à coudre les soufflets. De plus le brevet BE 057.055 et le brevet IT 9434-A/87 décrivent un dispositif pour le transfert des collants d'une machine à coudre les pointes à une machine à repasser les collants.

Tous ces dispositifs présentent tous ou certains des inconvénients suivants : constitution d'un système d'interaction rigide entre les deux machines, qui fait que l'arrêt d'une d'elles entraine l'arrêt forcé de l'autre ; limitation d'application du dispositif de transfert à un seul type de machine en amont et à un seul type de machine en aval ; impossibilité d'application à deux machines qui possèdent un temps de cycle de travail différent sans limiter la vitesse de production à celle de la machine la plus lente. De tels inconvénients portent à une réduction du rendement possible du système de production et ne sont plus acceptables en regard des nécessités industrielles actuelles dans le secteur des collants et produits manufacturés tubulaires similaires.

La présente invention a pour but d'éliminer les inconvénients des dispositifs connus à ce jour, en réalisant une machine qui permette la liaison non rigide entre deux groupes de machines de finissage des collants, bas et chaussettes, homogènes ou non, neuves ou usagées, qui permette l'accumulation des produits manufacturés en cours de traitement dans une position intermédiaire entre les deux groupes de machines même pendant l'arrêt temporaire d'une ou plusieurs machines d'un même groupe sans avoir à arrêter toutes les autres machines et qui ne nécessite en outre que d'une correspondance entre la somme de la production des machines du premier groupe et celle des machines du second groupe.

Ce résultat a été atteint en conformité avec l'invention, en adoptant l'idée d'utiliser un procédé opératoire qui comporte les opérations suivantes :

– prélever un par un les produits manufacturés de chaque machine du premier groupe de machines dans sa station de déchargement, les transporter en position suspendue hors de ladite machine et les orienter dans une position prédéterminée ;

– empiler en paquet un par un les produits manufacturés ainsi orientés, sur des moyens de supports prévus dans une station de chargement correspondante d'un transporteur des produits manufacturés en paquets ainsi formés, avec mouvement intermittent, d'au-moins deux machines du premier groupe à au-moins une machine du deuxième groupe à travers plusieurs stations d'arrêt intermédiaires, équidistantes ;

– sélectionner une station d'arrêt intermédiaire du transporteur des paquets de produits manufacturés qui à chaque fois se trouve libre ;

– transférer le paquet de produits manufacturés ainsi formé de ladite station de chargement à la station d'arrêt intermédiaire ainsi sélectionnée du transporteur ;

– sélectionner une station d'arrêt intermédiaire du transporteur qui à chaque fois se trouve occupée par un paquet de produits manufacturés ;

– transférer le paquet de produits manufacturés de la station d'arrêt intermédiaire ainsi sélectionnée à ladite station de déchargement du transporteur ;

– prélever un par un les produits manufacturés du paquet présent dans chaque station de déchargement du transporteur et les transférer sur une machine correspondante du deuxième groupe de machines, dans sa station de chargement.

Selon une forme préférentielle de réalisation, une machine pour le transfert automatique des collants d'un premier groupe à un deuxième groupe de machines de finissage desdits produits manufacturés suivant ledit procédé et pourvue de moyens connus en eux pour prendre un par un les collants dans la station de déchargement d'une machine de finissage du premier type, les tranporter en position suspendue hors de ladite machine et les orienter dans une position prédéterminée et pourvue en outre de moyens connus en eux pour prendre un par un les collants d'un paquet de plusieurs collants superposés et disposés de manière identique et les transporter dans la station de chargement d'une machine de finissage du deuxième type, cette machine comprend :

– un transporteur rectiligne avec courroies horizontales avec mouvement intermittent, bidirectionnel, avec à chaque extrémité une station de chargement, respectivement, en correspondance de la station de déchargement de deux machines du premier groupe de machines et avec au centre une station de déchargement en correspondance de la station de chargement d'une machine du deuxième groupe et avec plusieurs stations d'arrêt intermédiaires, équidistantes, chaque station étant pourvue d'un support pour un paquet de plusieurs collants superposés et avec les jambes suspendues d'un même côté, lequel est mobile verticalement à travers les courroies du transporteur, entre deux positions, l'une dépassant au-dessus desdites courroies pour permettre le chargement ou le déchargement et l'arrêt intermédiaire du paquet de collants correspondant et l'autre disparaissant sous lesdites courroies pour permettre le dépôt sur celles-ci du paquet de collants correspondant et en obtenir le déplacement d'une station à l'autre du transporteur ;

– des moyens de positionnement sélectif des supports des différentes stations dudit transporteur ;

– des moyens de contrôle du chargement/déchargement des collants formant le paquet présent dans la station chargement/déchargement correspondante dudit transporteur ;

– des moyens de sélection de la station intermédiaire du transporteur qui se trouve la plus éloignée/proche de la station de chargement/déchargement et libre/occupée chaque fois que le nombre de collants du paquet présent dans la station de chargement/déchargement atteint une valeur prédéterminée ;

– des moyens de contrôle du transport de chaque paquet de collants, de la station de chargement à celle de déchargement du transporteur, à travers plusieurs stations d'arrêt intermédiaires.

Selon une autre forme de réalisation de la machine en conformité avec l'invention, le transporteur des paquets de collants est du type circulaire, avec les supports pour les paquets de collants dans les stations de chargement, de déchargement et d'arrêt intermédiaire, formant ensemble un banc unique en forme de couronne circulaire horizontale, fixe et avec un profil de peigne, et avec au-moins un transporteur des paquets de collants en forme de bras horizontal ayant l'extrémité libre en forme de fourche, qui est rotatif concentriquement avec ledit banc, passant verticalement au travers de celui-ci pour permettre à l'extrémité en forme de fourche d'assumer deux positions, l'une dépassant au-dessus du banc pour obtenir le soulèvement d'un paquet de collants qui en occupe la section correspondante, et l'autre disparaissant au-dessous du banc pour permettre le dépôt du paquet de collants correspondant à cheval sur la section correspondante du banc, et en outre extensible horizontalement pour permettre à l'extrémité en forme de fourche de déplacer, à l'extérieur du banc, le paquet de collants à transporter.

Avantageusement, les moyens de contrôle de toutes les opérations sont constitués par un contrôleur logique programmable dans lequel sont mémorisées et mises à jour toutes les données fixes ou variables, c'est-à-dire le nombre prédéterminé de produits manufacturés qui forment un paquet dans chaque station de chargement du transporteur, le nombre et la position des stations d'arrêt intermédiaire libres/occupées, le nombre et le type de produits manufacturés qui forment le paquet présent sur le support de chaque station du transporteur, l'état des moyens de contrôle de l'arrivée à destination des paquets, ainsi que le programme de sélection des stations d'arrêt intermédiaire et de transfert des paquets de collants.

La solution proposée par la présente invention, permet le transfert des collants entre une ou plusieurs machines de finissage d'un premier groupe à une ou plusieurs machines de finissage d'un deuxième groupe, tout en conservant l'indépendance de fonctionnement propre à chaque machine et avec une accumulation temporaire des produits manufacturés en paquets de plusieurs unités superposées, permettant ainsi d'accumuler, temporairement dans un espace réduit, un grand nombre de produits manufacturés et de disposer, en cas d'arrêt d'une ou plusieurs machines du premier ou du deuxième groupe, d'une bonne marge de temps sans avoir à arrêter les machines correspondantes qui leur sont reliées. En outre, grâce au mode particulier de sélection des stations d'arrêt intermédiaire, la présente invention permet d'optimaliser la recherche des supports occupés par un paquet de collants et de ceux qui sont vides, le choix de la destination des paquets de collants et donc de réduire considérablement les risques d'arrêt des différentes machines reliées, à cela contribuant la priorité donnée à l'alimentation des machines du deuxième groupe.

Enfin, avec une forme particulière de réalisation du transporteur des paquets de collants, la présente invention permet le transfert individuel des paquets de et vers n'importe quelle station du transporteur permettant de réduire au minimum les temps de transfert et de relier aussi, au moyen d'un même transporteur, plusieurs machines d'un groupe qui ne sont pas homogènes, en mémorisant pour chaque station le type de produits manufacturés présents dans celle-ci et avec la possibilité d'atteindre n'importe quelle autre destination, indépendamment de l'état "occupé" ou "libre" des stations intermédiaires.

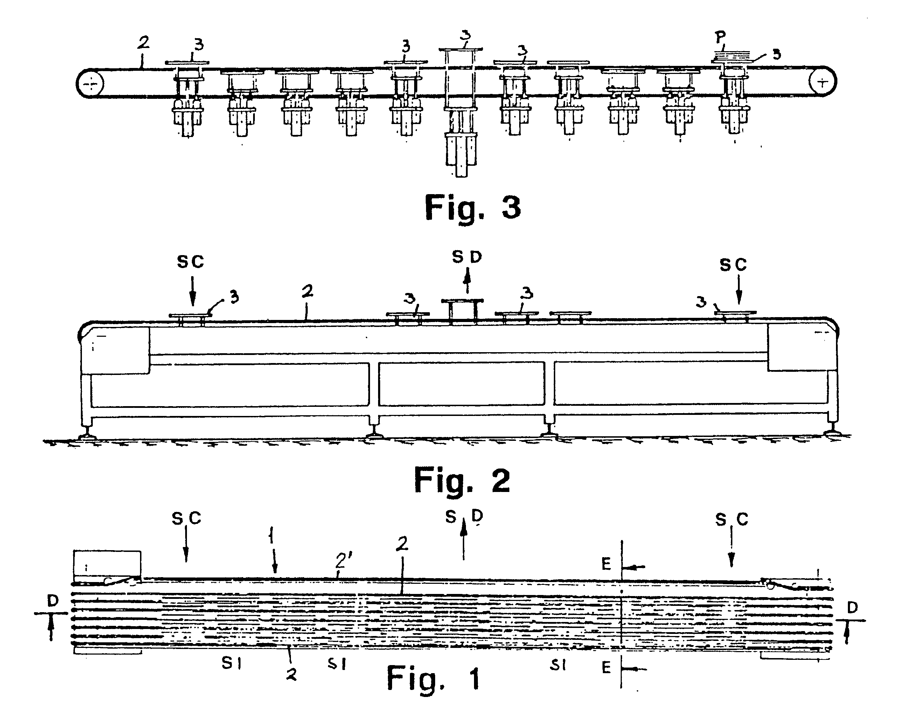

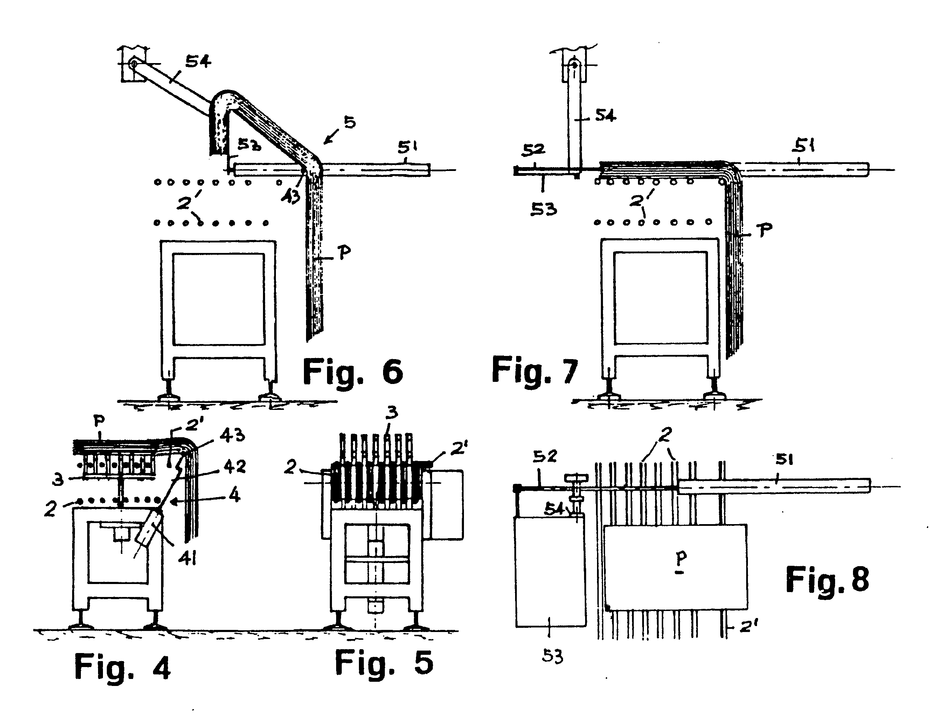

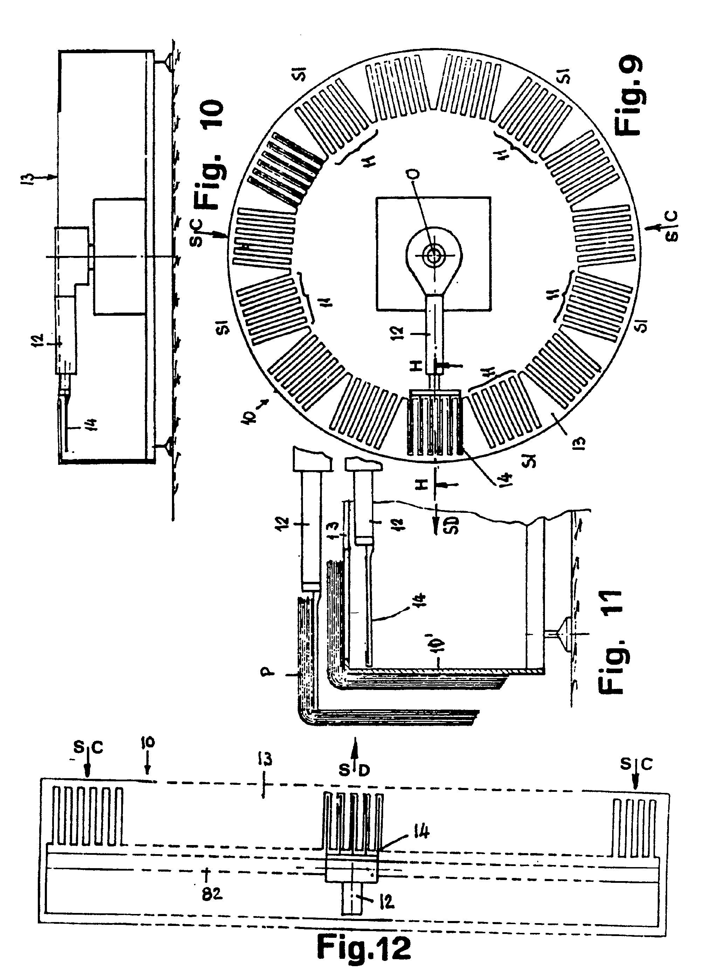

Ces avantages et caractéristiques ainsi que d'autres seront plus et mieux compris de chaque homme du métier à la lumière de la description qui va suivre et à l'aide des dessins annexés donnés à titre d'exemplification pratique de l'invention, mais à ne pas considérer dans le sens limitatif ; dessins sur lesquels : la FIG. 1 représente schématiquement, la vue en plan d'une première forme de réalisation d'une machine pour le transfert des produits manufacturés en conformité avec l'invention ; la FIG. 2 représente la vue de face de la machine de la Fig. 1 ; la FIG. 3 représente la section suivant la ligne D-D de la Fig. 1 ; la FIG. 4 représente la section suivant la ligne E-E de la Fig. 1 ; la FIG. 5 représente la vue de côté de droite de la machine de la Fig. 1 ; la FIG. 6 représente une vue détaillée d'un dispositif de chargement pour le transporteur de la Fig. 1, en phase de chargement ; la FIG. 7 représente le dispositif de la Fig. 6 à la fin du chargement ; la FIG. 8 représente une vue en plan du dispositif de la Fig. 7 ; la FIG. 9 représente schématiquement, la vue en plan d'une deuxième forme de réalisation d'une machine pour le transfert des produits manufacturés en conformité avec l'invention ; la FIG. 10 représente la vue de face de la machine de la Fig.9 ; la FIG. 11 représente la section suivant la ligne H-H de la Fig. 9 avec le paquet de collants avant et après sa prise par les moyens de transport ; la FIG. 12 représente la vue schématique en plan d'une variante de la machine de la Fig. 9.

De manière plus particulière, le procédé de transfert automatique des collants ou produits manufacturés tubulaires similaires d'un premier groupe à un deuxième groupe de machines de finissage desdits produits manufacturés, en conformité avec l'invention, comporte les opérations suivantes :

– prélever un par un les produits manufacturés dans la station de déchargement de chaque machine du premier groupe, les transporter en position suspendue hors de ladite machine et les orienter dans une position prédéterminée ;

– empiler en paquet les produits manufacturés ainsi orientés et avec les jambes pendantes d'un même côté, dans une station de chargement correspondante d'un transporteur à mouvement intermittent, interposé entre plusieurs machines du premier groupe et une ou plusieurs machines du deuxième groupe, et pourvue de plusieurs stations d'arrêt intermédiaires équidistantes, entre chaque station de chargement et chaque station de déchargement correspondante ;

– contrôler le nombre de produits manufacturés ainsi empilés jusqu'à former un paquet d'un nombre prédéterminé d'unités ;

– réserver une opération de transfert d'un paquet ainsi formé lorsqu'est atteint un nombre prédéterminé, inférieur au nombre maximum d'unités prévu pour un paquet ;

– sélectionner, à peine toute autre opération de transfert d'un paquet de produits manufacturés réservée ou en cours a été exécutée, la station d'arrêt intermédiaire dudit transporteur qui se trouve libre et la plus éloignée de la station de chargement correspondante ;

– transférer ledit paquet de produits manufacturés d'une station de chargement à une première station d'arrêt intermédiaire du transporteur ;

– contrôler l'arrivée à destination du paquet ;

– réserver une opération de transfert d'un nouveau paquet de produits manufacturés dans chaque station de déchargement du transporteur lorsque le paquet présent est réduit à un nombre prédéterminé d'unités, supérieur à zéro ;

– sélectionner, à peine toute autre opération de transfert de paquets de collants en cours est terminée, mais avant de prendre en considération une éventuelle réservation provenant d'une station de chargement, la station d'arrêt intermédiaire du transporteur qui se trouve occupée par un paquet de produits manufacturés et également la plus rapprochée de la station de déchargement correspondante du transporteur ;

– transférer le paquet de produits manufacturés de la station d'arrêt intermédiaire ainsi sélectionnée à la station de déchargement correspondante du transporteur, et transférer simultanément chaque paquet de produits manufacturés de la station d'arrêt intermédiaire correspondante à celle immédiatement successive dans la direction de la station de déchargement correspondante du transporteur ;

– prendre un par un les produits manufacturés du paquet présent dans chaque station de déchargement du transporteur et les transférer sur une machine correspondante du deuxième groupe de machines de finissage, dans sa station de chargement.

– contrôler le nombre de produits manufacturés du paquet en phase d'écoulement dans la station de déchargement correspondante du transporteur et jusqu'à son épuisement.

Le fait de prédéterminer, pour les opérations de réservation du transfert d'un paquet de produits manufacturés d'une station de chargement à une station intermédiaire ou respectivement d'une station intermédiaire à la station de déchargement correspondante du transporteur, un nombre de produits manufacturés inférieur au nombre maximum prévu pour le paquet à former dans chaque station de chargement ou respectivement supérieur à zéro pour chaque paquet à épuiser dans la station de déchargement correspondante, permet d'éviter un arrêt de la machine respectivement placée en amont ou en aval du transporteur lorsqu'un service de transfert d'un paquet est déjà en cours ; en effet, jusqu'à la fin du service en cours, les produits manufacturés continuent d'être empilés dans la station de chargement ou écoulés jusqu'à épuisement dans la station de déchargement ; cette dernière condition est rendue possible du fait que la réservation d'un service de transfert d'un paquet d'une station intermédiaire à la station de déchargement correspondante du transporteur est absolument prioritaire, de sorte qu'à la fin d'un service de transfert en cours, n'importe quel autre service est empêché jusqu'à l'épuisement du paquet présent dans la station de déchargement et jusqu'à l'achèvement du service de réapprovisionnement de ladite station de déchargement. Par conséquent les paquets de produits manufacturés formés dans chaque station de chargement du transporteur peuvent comporter un nombre variable d'unités et qui est compris entre ledit nombre prédéterminé pour la réservation du transfert et le nombre maximum prévu pour la composition des paquets, alors que dans chaque station de déchargement, chaque paquet est toujours épuisé avant d'effectuer le transfert dans ladite station d'un nouveau paquet de produits manufacturés.

Il est également possible d'effectuer le chargement/déchargement manuel des stations intermédiaires du transporteur en cas d'arrêt très prolongé d'une machine du premier/deuxième groupe, et de faire en sorte que toutes les stations d'arrêt intermédiaires soient vides ou pleines respectivement.

Selon une première forme de réalisation, une machine pour le transfert automatique des collants et produits manufacturés tubulaires similaires suivant ledit procédé en conformité avec l'invention et en référence aux Fig. 1 à 5 des dessins annexés, est conçue pour transférer les collants de deux machines de formation des collants, par exemple du type "Takatori", à une machine qui coud les pointes, par exemple du type "SOLIS 4", est composée, essentiellement, de :

– un transporteur rectiligne 1 du type à plusieurs courroies 2 fermées en anneau et asservies à un mouvement intermittent et bidirectionnel, dont les branches supérieures forment un plan horizontal de transport des paquets P de produits manufacturés de deux stations de chargement SC prévues aux extrémités du transporteur 1, en correspondance de la station de déchargement respective des deux machines de formation des collants, vers une station de déchargement SD prévue au centre du transporteur 1 et en correspondance de la station de chargement de la machine qui coud les pointes. Entre chaque station de chargement et la station de déchargement du transporteur sont prévues plusieurs stations d'arrêt intermédiaire SI, équidistantes, pour l'accumulation provisoire d'un nombre correspondant de paquets P de collants. Chaque station du transporteur est pourvue d'un support horizontal 3, pour plusieurs collants empilés en paquet et avec les jambes pendantes du même côté du support, lequel est constitué d'une grille horizontale composée de plusieurs lames parallèles minces et étroites écartées de manière appropriée pour pouvoir passer dans les espaces existants entre une courroie 2 et l'autre du transporteur 1 et lequel est asservi en outre à un mouvement vertical alternatif de manière à pouvoir assumer deux positions, l'une dépassant au-dessus desdites courroies 2 et l'autre disparaissant sous celles-ci pour permettre, respectivement, l'arrêt temporaire ou la mise en mouvement des paquets P de collants au moyen des courroies 2. En correspondance de chaque station du transporteur 1 est prévu un dispositif 4 avec un cylindre pneumatique 41 incliné d'environ 30° par rapport à la verticale, et dont la tige 42 porte à son extrémité libre un échelon horizontal 43 parallèle aux courroies 2 pour permettre de tenir les jambes des collants qui forment le paquet P, en position suspendue à une certaine distance au-delà de la courroie 2' qui se trouve la plus à l'extérieur du transporteur 1 : de cette manière il est possible de mettre en mouvement les courroies sans que celle-ci touchent les jambes des paquets en arrêt ;
– des moyens de contrôle : (a) du chargement/déchargement et déplacement des paquets de collants présents instantanément dans les stations chargement/déchargement du transporteur ; (b) de la sélection de la station d'arrêt intermédiaire SI qui à chaque fois se trouve la plus éloignée/proche de la station de chargement/déchargement SC/SD avec le support respectif vide/plein lorsque le paquet P présent dans ladite station de chargement/déchargement du transporteur, atteint un nombre prédéterminé d'unités ; (c) du transport de chaque paquet P de collants d'une station de chargement SC à une station d'arrêt SI ainsi sélectionnée et d'une station d'arrêt SI sélectionnée à la station de déchargement SD ; (d) du transport de chaque paquet P d'une station SI d'arrêt à celle SI placée immédiatement après dans la direction de la station de déchargement.

Avantageusement, lesdits moyens de contrôle sont constitués par un contrôleur logique programmable dans lequel sont mémorisées et mises à jour toutes les données fixes ou variables, c'est-à-dire le nombre prédéterminé de produits manufacturés par paquet pour chaque station de chargement du transporteur, le nombre et le type de produits manufacturés présents sur le support de chaque station, l'état des organes de contrôle de l'arrivée à destination des paquets, et le programme de sélection des stations d'arrêt et de transfert des paquets.

En variante et en remplacement du support 3 de chaque station SC de chargement du transporteur 1, est prévu un dispositif 5 avec un cylindre pneumatique 51 horizontal et à un niveau plus élevé que celui des courroies 2, dont la tige 52 présente l'extrémité libre articulée sur une des extrémités d'une planchette 53 dont l'autre extrémité est articulée sur un bras 54 oscillant dans un plan vertical, et de telle manière que, avec la tige 52 en position rentrée, la planchette 53 se trouve en position verticale et les collants soient empilés en paquet à cheval sur l'échelon 43 et sur ladite planchette 53 (comme illustré sur la Fig. 6), alors qu'avec la tige 52 en position complètement sortie, la planchette 53 se libère du paquet de collants qui se dépose automatiquement sur les courroies 2 du transporteur 1, lesquelles sont à l'arrêt. Il va de soi que la rotation de la planchette 53 peut être obtenue sans le cylindre 51, mais directement par l'intermédiaire du bras 54, lequel est porté en rotation par un cylindre pneumatique.

Lorsque le transporteur rectiligne 1 représenté sur les Fig. 1 à 5 des dessins annexés, est en fonctionnement normal, un paquet P de collants est en phase de formation dans chaque station SC de chargement du transporteur 1, un paquet P est en phase d'écoulement dans la station SD de déchargement, plusieurs paquets de collants sont en attente dans les correspondantes stations intermédiaires SI qui se trouvent les plus rapprochées de la station SD de déchargement et les autres stations d'arrêt intermédiaires SI sont vides ; les supports 3 de toutes les stations dans lesquelles est présent un paquet de collants sont en position émergente par rapport aux courroies 2 du transporteur et ces dernières sont à l'arrêt. Chaque fois que le paquet de collants qui se trouve dans la station de déchargement SD est épuisé, le support 3 de cette station, celui de la station d'arrêt SI la plus proche sélectionnée et ceux des stations d'arrêt qui se trouvent en amont de la station sélectionnée et qui sont occupées par un paquet de collants, sont abaissées au-dessous des courroies 2 du transporteur pour permettre le dépôt des paquets de collants P correspondants sur lesdites courroies, lesquelles, étant alors commandées pour avancer d'un pas dans la direction de la station SD de déchargement, pourvoient au transport de chaque paquet P de collants dans la station successive correspondante ; après quoi tous les supports 3 précédemment abaissés sont ramenés en position émergente au-dessus des courroies 2 du transporteur, de telle manière que chacun, à l'exception d'un, pourvoit au soulèvement d'un nouveau paquet de collants correspondant, et que le paquet qui se trouve alors dans la station SD de déchargement est en condition d'écoulement : des moyens étant prévus pour coopérer audit écoulement.

De manière analogue, chaque fois que le paquet P de collants présent dans une des stations SC de chargement est achevé, le support 3 de cette station, celui de la station d'arrêt libre la plus éloignée sélectionnée et ceux de toutes les stations intermédiaires SI sont abaissés au-dessous des courroies 2 du transporteur pour permettre le dépôt sur lesdites courroies du paquet P de collants à peine achevé ; après quoi, les courroies 2 sont commandées pour avancer dans la direction de la station SD de déchargement de ce qui est nécessaire pour que ledit paquet P soit transporté dans la station d'arrêt SI sélectionnée ; enfin tous les supports 3 précédemment abaissés sont ramenés dans la position émergente au-dessus des courroies 2 du transporteur, de manière à ce que ladite station d'arrêt SI sélectionnée pourvoie au soulèvement dudit paquet P, et que celui de la station SC de chargement soit en mesure de recevoir les collants pour former un nouveau paquet.

Conformément à l'invention, les positions des stations de chargement/déchargement SC/SD des produits manufacturés par rapport au convoyeur 1 peuvent avantageusement être echangées entre elles de manière à avoir une station de chargement SC au centre du convoyeur 1 et deux stations de déchargement SD à ses deux extrémités.

Ceci permet de transférer les produits manufacturés d'une machine très rapide à deux machines moins rapides.

Il est également possible, conformément à l'invention, de n'utiliser qu'une seule station de chargement SC et une seule station de déchargement SD du convoyeur 1, avec plusieurs stations d'arrêt intermédiaires SI faisant fonction de magasin de stockage temporaire des produits manufacturés ; ceci permet de transférer les produits manufacturés d'une machine à une autre, toutes les deux rapides.

Selon une autre forme de réalisation, une machine pour le transfert automatique des collants et produits manufacturés tubulaires similaires, suivant ledit procédé en conformité avec l'invention et en référence aux Fig. 9 à 11 des dessins annexés et conçue pour transférer les collants de deux machines d'un premier type à une machine d'un deuxième type, est composée essentiellement de :

– un transporteur 10 circulaire avec un banc 13 en forme de couronne circulaire horizontale avec plusieurs sections équidistantes et de même développement angulaire, lesquelles présentent un profil à peigne, chacune desquelles est destinée à supporter un paquet de collants P correspondant avec les jambes pendantes à l'extérieur du banc : deux desdites sections sont prévues en tant que stations de chargement SC et une en tant que station de déchargement SD, toutes les autres sections constituent les stations SI d'arrêt intermédiaires ;

– au-moins un bras 12 horizontal extensible et avec l'extrémité libre en forme de fourche 14, rotatif concentriquement avec ledit banc 13 et mobile également verticalement, avec la fourche passant en correspondance des différentes sections 11 du banc de manière à assumer deux positions, l'une dépassant au-dessus du banc 13 pour permettre le prélèvement, c'est-à-dire le soulèvement d'un paquet de collants dans n'importe quelle section, c'est-à-dire station, du banc et l'autre disparaissant au-dessous du banc 13 pour permettre le dépôt, c'est-à-dire l'arrêt, d'un paquet de collants dans une quelconque section ou station du banc 13.

En phase de transport d'un paquet de collants d'une station à l'autre du banc 13, le bras 12 est opportunément allongé pour permettre d'éloigner les jambes pendantes des collants de la paroi verticale externe 10' du banc 13 et pour faciliter le transport sans heurter les collants d'autres éventuels paquets en attente sur le banc. Ladite fourche est avantageusement pourvue de moyens pour pincer et maintenir le paquet en phase de transfert.

Selon une autre variante et en référence à la Fig. 12 des dessins annexés, une machine selon l'invention est composée essentiellement d'un transporteur rectiligne 10 comprenant :

– un banc 13 horizontal avec profil de peigne, subdivisé en plusieurs sections équidistantes et de même longueur, chacune desquelles est destinée à supporter un paquet de collants P correspondant avec les jambes pendantes vers l'extérieur ; les deux sections placées aux extrémités du banc 13 sont les stations SC de chargement, celle placée au centre est la station SD de déchargement et toutes les autres sections sont les stations d'arrêt intermédiaires SI ;

– au-moins un bras 12 horizontal extensible et avec l'extrémité libre en forme de fourche 14 passant en correspondance des différentes sections, c'est-à-dire stations, du banc 13 de manière à assumer une position dépassant au-dessus du banc et l'autre disparaissant au-dessous du banc, et ledit bras est en outre asservi à un mouvement horizontale bidirectionnel, guidé sur un rail 82 parallèle à l'axe du banc 13 pour permettre de se placer en position opérationnelle en correspondance des différentes sections ou stations du banc 13 (illustré sur la Fig. 12). Ladite fourche est avantageusement pourvue de moyens pour pincer le paquet, en phase de transfert.

Lorsque le transporteur circulaire ou celui rectiligne illustré sur la Fig. 12, est en fonctionnement normal, un paquet P de collants est en phase de formation dans chaque station de chargement SC et un paquet P est en phase d'écoulement dans la station de déchargement SD, d'autres paquets peuvent se trouver en attente dans des stations intermédiaires SI correspondantes. Juste avant que le paquet P de la station SD de déchargement soit épuisé, un bras 12 est réservé dans une station intermédiaire SI dans laquelle est présent un paquet de collants P, avec la fourche 14 en position au-dessous du banc 13 ; le bras 12 se soulève alors pour permettre à la fourche 14 de prélever le paquet de collants, le bras s'allonge ensuite vers l'avant pour permettre de porter le paquet de collants avec les jambes hors de l'espace d'encombrement du banc et enfin le bras 12 tourne autour de O/coulisse sur le rail 82 jusqu'à la station de déchargement SD, dans laquelle il se rétracte tout d'abord, puis s'abaisse en abandonnant le paquet P sur le banc 13 ; des moyens étant prévus pour coopérer à l'écoulement des collants un par un.

De manière analogue, juste avant que le paquet P d'une station de chargement SC soit achevé, le bras 12 est réservé en position au-dessous de ladite station et à peine le paquet est achevé, le bras 12 se soulève puis s'allonge vers l'avant, ensuite tourne autour de O/coulisse sur le rail 82 jusqu'à une quelconque station d'arrêt sélectionnée qui se trouve vide, il s'y arrête et dépose en s'abaissant le paquet P sur le banc 13.

**Revendications**

1. Procédé de transfert automatique des collants ou produits manufacturés tubulaires similaires entre d'un premier groupe à un deuxième groupe de machines de finissage desdits produits manufacturés, caractérisé en ce qu'il comporte les phases suivantes :

(a) prélever un par un les produits manufacturés dans la station de déchargement d'au-moins une machine du premier groupe, les transporter en position suspendue hors de la machine respective et les orienter dans une position prédéterminée ;

(b) empiler en paquet les produits manufacturés ainsi orientés, dans une station de chargement correspondante (SC) de moyens de transport à mouvement intermittent des collants en paquets ainsi formés, dedite/desdites machine/s du premier groupe à celle/s du deuxième groupe, à travers plusieurs stations d'arrêt intermédiaires (SI);

(c) contrôler le nombre des produits manufacturés ainsi déposés dans chaque station de chargement (SC) desdits moyens de transport jusqu'à former un paquet (P) d'un nombre prédéterminé d'unités ;

(d) sélectionner une station intermédiaire (SI) desdits moyens de transport (1) qui se trouve non occupée par un paquet de produits manufacturés ;

(e) transférer ledit paquet (P) de produits manufacturés ainsi formé de ladite station de chargement (SC) à ladite station intermédiaire (SI) sélectionnée des moyens de transport ;

(f) sélectionner une station intermédiaire (SI) desdits moyens de transport qui se trouve occupée par un paquet (P) de produits manufacturés ;

(g) transférer le paquet de produits manufacturés (P) de ladite station intermédiaire (SI) sélectionnée à une station de déchargement (SD) des moyens de transport (1) et éventuellement transférer dans une station intermédiaire (SI) successive correspondante le paquet (P) de produits manufacturés présent dans chaque station intermédiaire placée en amont de la station sélectionnée ;

(h) prendre un par un les produits manufacturés du paquet (P) présent dans chaque station de déchargement (SD) desdits moyens de transport et les transférer sur une machine correspondante du deuxième groupe, dans sa station de chargement ;

(i) contrôler le nombre de produits manufacturés du paquet (P) présent dans la station de déchargement (SD) desdits moyens de transport et jusqu'à son épuisement.

2. Procédé selon la revendication 1), caractérisé en ce que ladite sélection de la phase (d) est réservée chaque fois que le nombre de produits manufacturés du paquet en formation dans une station de chargement (SC) des moyens de transport (1) atteint un nombre prédéterminé d'unités inférieur au nombre maximum prévu pour chaque paquet et que ladite sélection est effectuée lorsqu'aucune autre opération de sélection ou de transfert n'est en cours.

3. Procédé selon la revendication 1), caractérisé en ce que ladite sélection de la phase (f) est réservée chaque fois que le nombre des produits manufacturés du paquet (P) en cours d'écoulement dans une station de déchargement (SD) des moyens de transport (1), atteint un nombre prédéterminé d'unité supérieur à zéro et que ladite sélection est effectuée lorque le zéro est atteint et qu'aucune autre opération de sélection ou de transfert n'est en cours.

4. Procédé selon les revendications 1) à 3), caractérisé en ce que les phases (b) et (h) ont lieu simultanément et que la réservation d'une sélection de la phase (f) est prioritaire par rapport à la réservation d'une sélection de la phase (e) dans le cas où l'épuisement d'un paquet (P) de produits manufacturés dans une station de déchargement (SD) a lieu simultanément avec l'achèvement d'un paquet de produits manufacturés dans une station de chargement (SC) des moyens de transport (1).

5. Machine pour le transfert automatique des collants ou produits manufacturés tubulaires similaires d'un premier groupe à un deuxième groupe de machines de finissage desdits produits manufacturés, suivant le procédé selon une ou plusieurs des revendications 1) à 4) et pourvue de moyens pour prendre un par un les collants dans la station de déchargement d'au moins une machine de finissage du premier type, les tranporter en position suspendue hors de ladite machine et les orienter dans une position prédéterminée et pourvue en outre de moyens pour prendre un par un les produits manufacturés superposés et disposés de la même manière et les charger sur au moins une machine de finissage du deuxième type dans sa station de chargement, caractérisée en ce qu'elle comprend :

　– un transporteur rectiligne (1), à courroies horizontales (2) et mouvement intermittent, bidirectionnel, avec en tête deux stations de chargement/déchargement (SC/SD), chacune placée en correspondance de la station de déchargement/chargement (SD/SC) de deux machines du premier groupe avec au centre au moins une station de déchargement/chargement (SD/SC) placée en correspondance de la station de chargement/déchargement d'une machine du deuxième groupe, et avec une série de stations d'arrêt intermédiaires (SI), équidistantes : chaque station étant pourvue d'un élément de support (3) pour un paquet (P) de plusieurs produits manufacturés superposés et avec les jambes pendantes d'un même côté de celui-ci, lequel support est mobile verticalement à travers les courroies (2) du transporteur, entre deux positions, l'une dépassant au-dessus desdites courroies pour permettre le chargement, le déchargement et l'arrêt d'un paquet (P) de produits manufacturés correspondant, et l'autre disparaissant sous lesdites courroies pour permettre le dépôt sur celles-ci du paquet de produits manufacturés correspondant et le déplacement d'une station à l'autre du transporteur (1) à la suite de l'activation du mouvement desdites courroies (2);

　– des moyens pour le positionnement sélectif des supports (3) dudit transporteur ;

　– des moyens de contrôle du chargement/déchargement des produits manufacturés formant le paquet (P) présent dans chaque station chargement/déchargement dudit transporteur (1) ;

　– des moyens de sélection de la station intermédiaire (SI) du transporteur (1) qui se trouve à chaque fois la plus éloignée/proche de la station de chargement/déchargement correspondante et a son support chargé/déchargé de produits manufacturés, chaque fois que le paquet (P) de produits manufacturés présent dans ladite station de chargement/déchargement atteint un nombre prédéterminé d'unités ;

　– des moyens de contrôle du transport de chaque paquet de produits manufacturés de la station de chargement (SC) à celle de déchargement (SD) du transporteur (1), à travers plusieurs stations d'arrêt intermédiaires (SI).

6. Machine selon la revendication 5), caractérisée en ce que ledit élément de support (3) des produits manufacturés dans chaque station dudit transporteur (1) est constitué par une grille horizontale composée de plusieurs lames parallèles et opportunément écartées de telle manière qu'elles sont aptes à passer dans les espaces existants entre une courroie (2) et l'autre du transporteur.

7. Machine selon la revendication 5), caractérisée en ce qu'en correspondance de chaque station du transporteur (1), elle comprend des moyens (4) pour maintenir les jambes pendantes des collants du paquet écartées de la courroie (2') correspondante du transporteur.

8. Machine selon la revendication 5), caractérisée en ce qu'en correspondance de chaque station de chargement (SC) du transporteur (1), elle comprend des moyens (5) à géométrie variable pour permettre la formation d'un paquet (P) de collants avant son dépôt sur les courroies (2) du transporteur (1).

9. Machine selon la revendication 8), caractérisée en ce que lesdits moyens (5) comprennent à un niveau supérieur à celui des courroies (2) du transporteur (1), une planchette (53) dont une extrémité est articulée sur un bras (54) et de telle manière que ladite planchette (53) se trouve en position verticale en phase de formation du paquet (P) de collants et respectivement, en position horizontale et écartée des courroies (2) en phase de dépôt du paquet (P) sur les courroies (2).

10. Machine pour le transfert automatique des collants ou produits manufacturés similaires d'un premier groupe à un deuxième groupe de machines de finissage desdits produits manufacturés, suivant le procédé selon une ou plusieurs des revendications 1) à 4) et pourvue de moyens pour prendre un par un les collants dans la station de déchargement d'une machine de finissage du premier type, les transporter en position suspendue hors de ladite machine et les orienter dans une position prédéterminée et pourvue en outre de moyens pour prendre un par un les produits manufacturés superposés et disposés de la même manière et les charger sur une machine de finissage du deuxième type dans sa station de chargement, caractérisée en ce qu'elle comprend :

– un transporteur (10) circulaire, avec un banc horizontal (13) en forme de couronne circulaire et avec un profil de peigne, dont les sections (11) équidistantes et de même développement angulaire constituent les différentes stations, et parmi lesquelles au-moins deux sont les stations de chargement (SC), placées en correspondance de la station de déchargement d'autant de machines du premier groupe et au-moins une station de déchargement (SD) placée en correspondance de la station de chargement d'une machine du deuxième groupe, toutes les autres sont les stations (SI) d'arrêt intermédiaires ; et avec au-moins un bras horizontal (12) avec l'extrémité en forme de fourche (14), lequel est rotatif concentriquement avec ledit banc (13) et mobile verticalement à travers chaque section (11) du secteur correspondant du banc (13) pour permettre à la fourche (14) d'assumer deux positions, l'une dépassant au-dessus du banc (13) et l'autre disparaissant au-dessous du banc (13), et en outre extensible horizontalement jusqu'à ce que la fourche (14) se trouve hors et au-delà du banc (13).

11. Machine selon la revendication 10), caractérisée en ce que ledit transporteur (10) est rectiligne, avec un banc (13) horizontal avec profil de peigne, dont les sections (11) équidistantes et de même longueur constituent les différentes stations et avec au-moins un bras (12) horizontal, avec l'extrémité en forme de fourche (14), ledit bras étant asservi à un mouvement bidirectionnel intermittent sur un rail horizontal parallèle à l'axe du banc (13), et mobile verticalement avec la fourche (14) passant à travers chaque section (11) du secteur correspondant du banc et en outre extensible horizontalement jusqu'à ce que la fourche (14) se trouve hors et au-delà du banc (13).

12. Machine selon les revendications 5) et 10), caractérisée en ce que lesdits moyens de contrôle des différentes opérations sont constitués par un contrôleur logique programmable dans lequel sont mémorisées et mises à jour toutes les données fixes ou variables, lesquelles sont le nombre prédéterminé de produits manufacturés par paquet (P) dans chaque station de chargement/déchargement du transporteur (1, 10), le nombre et les positions des stations intermédiaire (SI) du transporteur (1, 10) pour les arrêts intermédiaires correspondant des paquets de produits manufacturés, le nombre et le type de produits manufacturés présents dans chaque station du transporteur, et le programme de sélection des stations de destinations des paquets de produits manufacturés.

**Ansprüche**

1. Verfahren zum automatischen Transfer von Strumpfhosen oder ähnlichen schlauchförmigen Herstellungsprodukten zwischen einer ersten Gruppe und einer zweiten Gruppe von Maschinen zur Bearbeitung dieser Herstellungsprodukte, dadurch **gekennzeichnet**, daß es folgende Phasen umfaßt :

(a) Abnehmen der Herstellungsprodukte eines nach dem anderen an der Entladestation wenigstens einer Maschine der ersten Gruppe, Transportieren dieser Herstellungsprodukte in eine hängende Lage außerhalb der betreffenden Maschine und Ausrichten dieser Herstellungsprodukte in eine vorbestimmte Lage,

(b) Stapeln der so ausgerichteten Herstellungsprodukte zu einem Bündel in einer entsprechenden Beladestation (SC) einer Transporteinrichtung für eine intermittierende Bewegung der Strumpfhosen in den so gebildeten Bündeln von der Maschine oder den Maschinen der ersten Gruppe zu der Maschine oder den Maschinen der zweiten Gruppe über mehrere Anhalte-Zwischenstationen (SI),

(c) Überwachen der Zahl der derart in jeder Beladestation (SC) der Transporteinrichtung abgelegten Herstellungsprodukte bis zur Bildung eines Bündels (P) mit einer vorbestimmten Anzahl von Einheiten,

(d) Auswählen einer Zwischenstation (SI) besagter Transporteinrichtung (1), die momentan nicht durch ein Bündel von Herstellungsprodukten belegt ist,

(e) Transferieren des besagten so gebildeten Bündels (P) von Herstellungsprodukten von der besagten Beladestation (SC) zu der besagten ausgewählten Zwischenstation (SI) der Transporteinrichtung,

(f) Auswählen einer Zwischenstation (SI) besagter Transporteinrichtung, die momentan mit einem Bündel (P) von Herstellungsprodukten belegt ist,

(g) Transferieren des Bündels (P) von Herstellungsprodukten von der besagten, ausgewählten Zwischenstation (SI) zu einer Entladestation (SD) der Transporteinrichtung (1) und gegebenenfalls Transferieren des Bündels (P) von Herstellungsprodukten, das in jeder Zwischenstation vorhanden ist, die sich in Bewegungsrichtung vor der ausgewählten Station befindet, in eine entsprechende nachfolgende Zwischenstation (SI),

(h) Aufnehmen der Herstellungsprodukte des in jeder Entladestation (SD) der Transporteinrichtung vorhandenen Bündels (P) eines nach dem anderen und Transferieren dieser Herstellungsprodukte auf eine entsprechende Maschine der zweiten Gruppe in deren Beladestation,

(i) Überwachen der Zahl der Herstellungsprodukte des Bündels (P), das sich in der Entladestation (SD) der Transporteinrichtung befindet, bis dieses Bündel aufgebraucht ist.

2. Verfahren nach Anspruch 1, dadurch **gekennzeichnet**, daß die Auswahl der Phase (d) jedesmal dann vorgemerkt wird, wenn die Zahl der Herstellungsprodukte des in Bildung befindlichen Bündels in einer Beladestation (SC) der Transporteinrichtung (1) eine vorbestimmte Zahl von Einheiten erreicht, die kleiner ist als die für jedes Bündel vorgesehene Maximalzahl, und daß besagte Auswahl durchgeführt wird, während keine andere Auswahl- oder Transferoperation abläuft.

3. Verfahren nach Anspruch 1, dadurch **gekennzeichnet**, daß die Auswahl der Phase (f) jedesmal dann vorgemerkt wird, wenn die Zahl der Herstellungsprodukte des im Abbau befindlichen Bündels (P) in einer Entladestation (SD) der Transporteinrichtung (1) eine vorbestimmte Zahl von Einheiten größer Null erreicht, und daß diese Auswahl durchgeführt wird, wenn die Zahl Null erreicht wird und während keine andere Auswahl- oder Transferoperation abläuft.

4. Verfahren nach einem der Ansprüche 1 bis 3, dadurch **gekennzeichnet**, daß die Phasen (b) und (h) gleichzeitig stattfinden und daß die Vormerkung einer Auswahl der Phase (f) bezüglich der Vormerkung einer Auswahl der Phase (d) in dem Fall bevorzugt ist, daß das Aufbrauchen eines Bündels (P) von Herstellungsprodukten in einer Entladestation (SD) gleichzeitig mit der Fertigstellung eines Bündels von Herstellungsprodukten in einer Beladestation (SC) der Transporteinrichtung (1) auftritt.

5. Maschine für den automatischen Transfer von Strumpfhosen oder ähnlichen schlauchförmigen Herstellungsprodukten von einer ersten Gruppe zu einer zweiten Gruppe von Maschinen zur Bearbeitung dieser Herstellungsprodukte gemäß dem Verfahren nach einem oder mehreren der Ansprüche 1 bis 4, die Einrichtungen umfaßt, um in der Entladestation wenigstens einer Bearbeitungsmaschine vom ersten Typ die Strumpfhosen eine nach der anderen zu erfassen, sie in eine hängende Lage aus dieser Maschine herauszubefördern und sie in eine vorbestimmte Lage auszurichten, und die überdies Einrichtungen aufweist, um die gestapelten und in gleicher Weise angeordneten Herstellungsprodukte eines nach dem anderen zu erfassen und sie wenigstens einer Bearbeitungsmaschine vom zweiten Typ in deren Beladestation zuzuführen, dadurch **gekennzeichnet**, daß sie folgende Bestandteile umfaßt :

– Eine geradlinige Transporteinrichtung (1) mit horizontalen Förderbändern (2) und intermittierender Bewegung in beiden Richtungen, mit zwei Kopfstationen (SC oder SD) zum Be- oder Entladen, von denen jede in Entsprechung zur Ent- oder Beladestation (SD oder SC) der beiden Maschinen der ersten Gruppe angeordnet ist, und mit wenigstens einer in der Mitte befindlichen Ent- oder Beladestation (SD oder SC), die in Entsprechung mit der Be- oder Entladestation einer Maschine der zweiten Gruppe angeordnet ist, und mit einer Reihe von äquidistanten Anhalte-Zwischenstationen (SI), wobei jede Station mit einem Tragelement (3) für ein Bündel (P) aus mehreren aufgestapelten Herstellungsprodukten versehen ist, deren Beine auf derselben Seite des Tragelementes herabhängen, das in senkrechter Richtung quer durch die Förderbänder (2) der Transporteinrichtung (1) zwischen zwei Stellungen bewegbar ist, von denen die eine über die Förderbänder nach oben hinausragt, um das Beladen, das Entladen und das Anhalten eines entsprechenden Bündels (P) von Herstellungsprodukten zu ermöglichen, und von denen die andere unter den Förderbändern verschwindet, um das Ablegen des entsprechenden Bündels von Herstellungsprodukten auf den Förderbändern und dessen Verlagerung von einer Station der Transporteinrichtung (1) zu einer anderen infolge einer Aktivierung der Bewegung der besagten Förderbänder (2) zu ermöglichen,

– Vorrichtungen zur selektiven Positionierung der Tragelemente (3) der Transporteinrichtung,

– Vorrichtungen zur Überwachung des Be- und Entladens der Herstellungsprodukte, die das Bündel (P) bilden, das in jeder Be- und Entladestation der Transporteinrichtung (1) vorhanden ist,

– Einrichtungen zur Auswahl der Zwischenstation (SI) der Transporteinrichtung (1), die jeweils zu der entsprechenden Be- oder Entladestation und zu ihrem beoder entladenen Tragelement für die Herstellungsprodukte am weitesten entfernt oder am nächsten jedesmal dann angeordnet ist, wenn das Bündel (P) von Herstellungsprodukten, das in der betreffenden Be- oder Entladestation vorhanden ist, eine vorbestimmte Anzahl von Einheiten erreicht,

– Einrichtungen zur Überwachung des Transportes eines jeden Bündels von Herstellungsprodukten von der Beladestation (SC) zur Entladestation (SD) der Transporteinrichtung (1) durch mehrere Anhalte-Zwischenstationen (SI) hindurch.

6. Maschine nach Anspruch 5, dadurch **gekennzeichnet**, daß das Tragelement (3) für die Herstellungsprodukte in jeder Station der Transporteinrichtung (1) von einem horizontalen Rost gebildet wird, der aus mehreren parallelen Streifen zusammengesetzt ist, die in günstiger Weise derart voneinander im Abstand angeordnet sind, daß sie durch die Zwischenräume hindurchtreten können, die zwischen den Förderbändern (2) der Transporteinrichtung vorhanden sind.

7. Maschine nach Anspruch 5, dadurch **gekennzeichnet**, daß sie in Entsprechung mit jeder Station der Transporteinrichtung (1) Vorrichtungen (4) umfaßt, die dazu dienen, die herabhängenden Beine der Strumpfhosen des Bündels im Abstand von dem entsprechenden Förderband (2') der Transporteinrichtung zu halten.

8. Maschine nach Anspruch 5, dadurch **gekennzeichnet**, daß sie in Entsprechung mit jeder Beladestation (SC) der Transporteinrichtung (1) Vorrichtungen (5) mit veränderbarer Geometrie umfaßt, die die Bildung eines Bündels (P) von Strumpfhosen vor dessen Ablegen auf den Förderbändern (2) der Transporteinrichtung (1) ermöglichen.

9. Maschine nach Anspruch 8, dadurch **gekennzeichnet**, daß besagte Vorrichtungen (5) auf einem Niveau, das über dem Niveau der Förderbänder (2) der Transporteinrichtung (1) liegt, ein Brettchen (53) umfassen, von dem das eine Ende an einem Arm (54) in der Weise angelenkt ist, daß sich das Brettchen (53) in der Phase der Bildung des Bündels (P) von Strumpfhosen in einer senkrechten Stellung bzw. in der Phase des Ablegens des Bündels (P) auf den Förderbändern (2) in einer waagrechten, von den Förderbändern (2) beabstandeten Stellung befindet.

10. Maschine für den automatischen Transfer von Strumpfhosen oder ähnlichen Herstellungsprodukten von einer ersten Gruppe zu einer zweiten Gruppe von Maschinen zur Bearbeitung dieser Herstellungsprodukte gemäß dem Verfahren nach einem oder mehreren der Ansprüche 1 bis 4, die Einrichtungen umfaßt, um in der Entladestation einer Bearbeitungsmaschine vom ersten Typ die Strumpfhosen eine nach der anderen zu erfassen, sie in eine hängende Lage aus dieser Maschine herauszubefördern und sie in eine vorbestimmte Lage auszurichten, und die überdies Einrichtungen aufweist, um die gestapelten und in gleicher Weise angeordneten Herstellungsprodukte eines nach dem anderen zu erfassen und sie einer Bearbeitungsmaschine vom zweiten Typ in deren Beladestation zuzuführen, dadurch **gekennzeichnet**, daß sie folgende Bestandteile umfaßt :

– Eine kreisförmige Transporteinrichtung (10) mit einer horizontalen Bank (13) in Form eines Kreisringes mit einem Kammprofil, dessen äquidistante, die gleiche Winkelabwickelung aufweisende Sektionen (11) die verschiedenen Stationen bilden, von denen wenigstens zwei die Beladestationen (SC) bilden, die in Entsprechung mit den Entladestationen ebenso vieler Maschinen der ersten Gruppe angeordnet sind, und von denen wenigstens eine eine Entladestation (SD) ist, die in Entsprechung zur Beladestation einer Maschine der zweiten Gruppe angeordnet ist, während alle anderen die Anhalte-Zwischenstationen (SI) bilden, und mit wenigstens einem horizontalen Arm (12) mit einem Ende in Form einer Gabel (14), der zur Bank (13) konzentrisch drehbar und senkrecht durch jede Sektion (11) des betreffenden Sektors der Bank (13) hindurchbewegbar ist, so daß die Gabel (14) zwei Positionen einnehmen kann, von denen die eine über die Bank (13) nach oben hinausragt und die andere unterhalb der Bank (13) verschwindet, und wobei der Arm im übrigen horizontal so weit verlängerbar ist, bis sich die Gabel (14) außerhalb und jenseits der Bank (13) befindet.

11. Maschine nach Anspruch 10, dadurch **gekennzeichnet**, daß die Transporteinrichtung (10) geradlinig ist, mit einer horizontalen Bank (13) mit Kammprofil, deren äquidistante und gleichlange Sektionen (11) die verschiedenen Stationen bilden, und mit wenigstens einem horizontalen Arm (12) mit einem Ende in Form einer Gabel (14), wobei dieser Arm für eine bidirektionale, intermittierende Bewegung auf einer horizontalen, zur Achse der Bank (13) parallelen Schiene gesteuert wird und in senkrechter Richtung so bewegbar ist, daß die Gabel (14) durch jede Sektion (11) des entsprechenden Abschnitts der Bank hindurchtritt, und der Arm überdies horizontal verlängerbar ist, bis sich die Gabel (14) außerhalb und jenseits der Bank (13) befindet.

12. Maschine nach den Ansprüchen 5 und 10, dadurch **gekennzeichnet**, daß die Einrichtungen zur Überwachung der verschiedenen Operationen von einer programmierbaren logischen Steuereinheit gebildet werden, in der alle festen und variablen Daten gespeichert sind und aktualisiert werden, nämlich die vorbestimmte Anzahl der Herstellungsprodukte pro Bündel (P) in jeder Be- oder Entladestation der Transporteinrichtung (1, 10), die Zahl und die Lage der Zwischenstationen (SI) der Transporteinrichtung (1, 10) für die Zwischenhalte entsprechend den Bündeln der Herstellungsprodukte, die Zahl und die Art der Herstellungsprodukte, die in jeder Station der Transporteinrichtung vorhanden sind, sowie das Programm zur Auswahl der Bestimmungsstationen für die Bündel von Herstellungsprodukten.

## Claims

1. Process of automatic transfer of tights or similar manufactured tubular products from a first group to a second group of finishing machines of the said manufactured products, characterized by the fact that it consists of the following phases :

a) Sampling the manufactured products one by one in an unloading station of at least one machine of the first group, transporting them in a suspended position from the respective machine and orientating them in a predetermined position;

b) stacking up a package of the manufactured products orientated in this way in a corresponding loading station (SC) of a means of transport for intermittent movement of the tights in packages formed in this way, from the said machine(s) of the first group to those of the second group, across several intermediate stopping stations (SI) ;

c) controlling the number of products thus manufactured deposited in each loading station (SC) of the said means of transport to form a package (P) of a predetermined number of units ;

d) selecting an intermediate station (SI) of the said means of transport (1) which is not occupied by a package of the manufactured products ;

e) transferring the said package (P) of the manufactured products thus formed from the said loading station (SC) to the said intermediate station (SI) selected by the means of transport ;

f) selecting an intermediate station (SI) of the said means of transport which is occupied by a package (P) of the manufactured products ;

g) transferring the package of manufactured products (P) of the said selected intermediate station (SI) to an unloading station (SD) of the means of transport (1) and possibly transferring the package (P) of manufactured products present in each intermediate station placed upstream of the selected station, in an intermediate station (SI) ;

h) taking the manufactured products of the package (P) one by one, present in each unloading station (SD) of the said means of transport and transferring them to a corresponding machine of the second group, in its loading station ;

i) controlling the number of manufactured products of the package (P) present in the unloading station (SD) of the said means of transport, up to its end ;

2. Process according to claim 1, characterized by the fact that the said selection of phase (d) is reserved each time that the number of manufactured products of the package being formed in a loading station (SC) of the means of transport (1) reaches a predetermined number of units less than the maximum number envisaged for each package, and that the said selection is made while no other selection is made while no other selection or transfer operation is running.

3. Process according to claim 1, characterized by the fact that the said selection of phase (f) is reserved each time that the number of manufactured products of package (P) in the course of passing into an unloading station (SD) of the means of transport (1) reaches the predetermined number of units greater than zero and that the said selection is made when zero is reached and that no other selection or transfer operation is running.

4. Process according to claims 1. to 3, characterized by the fact that phases (b) and (h) occur simultaneously and that the reservation of a selection of phase (f) has priority relative to the reservation of a selection of phase (e) in the case where the ending of a package (P) of manufactured products in an unloading station (SD) occurs simultaneously with producing a package of manufactured products in a loading station (SC) of the means of transport (1).

5. Machine for the automatic transfer of the tights or similar tubular manufactured products from a first group to a second group of finishing machines of the said manufactured products, according to the process of one or more claims 1. to 4, and endowed with the means of taking the tights one by one into the unloading station by means of a finishing machine of the first type, transporting them in a suspended position from the said machine and orientating them in a predetermined position and also endowed with means of taking the superimposed manufactured products one by one and arranging them in the same way and loading them on at least one finishing machine of the second type in its loading position, characterized by the fact that it consists of :

– a rectilinear transporter (1), with horizontal belts (2) and intermittent bidirectional movement, with two loading/unloading stations (SC/SD) at the head, each placed correspondingly to the unloading/loading station (SD/SC) of the two machines of the first group with, in the middle, at least one unloading/loading station (SD/SC) placed correspondingly to the loading/unloading station of a machine of the second group and with a series of a machine of the second group, and with a series of equidistant intermediate stopping stations (SI): each station being endowed with a support element (3) for a package (P) of several super-imposed manufactured products, and with the pendant legs of its same side, where the support is vertically movable across the belts (2) of the transporter, between two positions, one passing above the said belts to permit loading, unloading and stopping a package (P) of the corresponding manufactured products and the other disappearing under the said belts, to permit deposition of the package of corresponding manufactured products on them and the displacement from one station to the other of the transporter (1) following the activation of the movement of the said belt (2) ;
 – means for the selective positioning of supports (3) of the said transporter ;
 – means of controlling the loading/unloading of the manufactured products forming the package (P) present in each loading/unloading station of the said transporter (1) ;
 – means of selecting the intermediate station (SI) of the transporter (1), which each time is the furthest from/nearest to the corresponding loading/unloading station and is its loaded/unloaded support of the manufactured products, each time that the package (P) of the manufactured products present in the said loading/unloading station reaches a predetermined number of units ;
 – means of controlling the transport of each package of manufactured products from the loading station (SC) to the unloading station (SD) of transporter (1), across several intermediate stopping stations.

6. Machine according to claim 5, characterized by the fact that the said support element (3) of the manufactured products in each station of the said transporter (1) consists by a horizontal grid consisting of several parallel blades and suitably spaced so that it is suitable for passing through the existing spaces between one belt (2) of the transporter and the other one.

7. Machine according to claim 5, characterized by the fact that, corresponding to each station of transporter (1), it contains means (4) for keeping the pendant legs of the tights of the package spaced from the corresponding belt (2') of the transporter.

8. Machine according to claim 5, characterized by the fact that, corresponding to each loading station (SC) of the transporter (1), it contains means (5) of variable geometry to permit the formation of a package (P) of tights before its deposition of the belts (2) of the transporter (1).

9. Machine according to claim 8, characterized by the fact that the said means (5) include a small board (53) at a level higher than that of the belts (2) of transporter (1), one end of which is articulated on an arm (54) and in such a way that the said small board (53) is in a vertical position in the forming phase of the package (P) of tights and, respectively, in a horizontal position and spaced from the belts (2) in the deposition phase of the package (P) on the belts (2).

10. Machine for the automatic transfer of tights or similar manufactured products from a first group of finishing machines to a second group for the said manufactured products, according to the process of one or more of claims 1. to 4, and endowed with means for taking the tights one by one from the unloading station of one finishing machine of the first type, transporting them in a suspended position outside the said machine and orientating them in a predetermined position, and also endowed with means for taking the superimposed manufactured products one by one and arranging them in the same manner and loading them on a finishing machine of the second type in its loading station, characterized by the fact that it includes :
 – a circular transporter (10), with a horizontal bench (13) in the form of a circular crown and with a comb profile, the equidistant sections of which (11), having the same angular development, constitute the different stations and of which at least two are the loading stations (SC), placed correspondingly to the unloading stations according to the machines of the first group and at least one unloading station (SD) placed corresponding to the loading station of a machine of the second group, where all the others are intermediate stopping stations (SI) ; and with at least one horizontal arm (12) with the end in the form of a fork (14), which rotates concentrically with the said bench (13) and can move vertically across each section (11) of the corresponding sector of bench (13) to enable the fork (14) to assume two positions, one above bench (13) and the other disappearing below bench (13) and also extensible horizontally until the fork (14) is outside and beyond the bench (13).

11. Machine according to claim 10, characterized by the fact that the said transporter (10) is rectilinear, with a horizontal bench (13) with a comb profile, the equidistant sections of which (11) having the same length constitute the different stations and with at least one horizontal arm (12), with the end in the form of a fork (14), the said arm subject to an intermittent bidirection movement on a horizontal rail parallel to the axis of the bench (13) and moving vertically with the fork (14) passing across each section (11) of the corresponding sector of the bench and also horizontally extensible until the fork (14) is outside and beyond the bench (13).

12. Machine according to claims 5. and 10, characterized by the fact that the said means of controlling different operations consist of a programmable logic controller in which all the fixed or variable data are stored and brought up to date, which are the predetermined number of manufactured products per package (P) in each loading/unloading station of the transporter (1, 10), the number and positions of the intermediate stations (SI) of the transporter (1, 10) for the corresponding intermediate stops of the packets of manufactured products, the number and the type of manufactured products present in each transporter station and the selection programme of the destination stations of the packets of manufactured products.

**Fig. 3**

**Fig. 2**

**Fig. 1**

EP 0 309 419 B1

Fig. 6

Fig. 7

Fig. 4

Fig. 5

Fig. 8

EP 0 309 419 B1

Fig. 9

Fig. 10

Fig. 11

Fig.12